# EUROPEAN PATENT SPECIFICATION

(11) **EP 0 907 445 B1**
(45) Date of publication and mention of the grant of the patent: **19.12.2001**
(21) Application number: 97922251.0
(22) Date of filing: 29.04.1997
(51) Int. Cl.: B23B 51/02, B23C 5/02

(54) **DRILL**
BOHRER
FORET

(30) Priority: 02.05.1996 SE 9601674
(43) Date of publication of application: 14.04.1999
(73) Proprietor: SANDVIK AKTIEBOLAG, 811 81 Sandviken (SE)
(72) Inventor: LINDBLOM, Stefan, S-804 27 Gävle (SE)
(86) International application number: SE9700716
(87) International publication number: WO9740953

(56) References cited:
- EP-A- 0 132 149
- SE-B- 451 241
- SE-C- 501 515
- US-A- 4 222 690

## Description

The present invention relates to a drill of the type including a shank having a front, tip-forming end with two in a common main plane located cutting inserts or cutting insert-like portions having main cutting edges parallel to the main plane, said cutting edges at opposite ends transforming into shorter, central cutting edges being oriented in a substantially common secondary plane extending at an acute angle relative to said main plane, said cutting edges together forming a pointed centre cutting edge for the purpose of entering a work piece, whereby the drill is centered in a desired engagement point relative to said work piece, said shank having two at least partly helical flutes extending from the tip end to a base end in connection with a rear thicker portion of the shank, said flutes in each arbitrary cross-section along the shank being located diametrically opposite each other in a plane extending at an angle of 90° to a plane that is common for two lands on both sides of the flutes, said shank having maximum bending rigidity in said plane.

### Prior art

Drills of the type generally defined above are previously known from e.g. SE 9103713-5 and SE 9302971-8. A drill comprising the features of the preamble of claim 1 is also known from SE-C-501515. In practical use of such drills it has been observed that different drills have significantly different properties in connection with the entering of a work piece. Certain drills, when brought into engagement with the work piece, on one hand being centered relatively distinct in the wanted engagement point and on the other hand producing a hole having a relatively accurate entering diameter. In other cases the centre cutting edge of the drill, in connection with the entering, is subjected to wabbles of different kind; the consequence of this may be that the absolute centre of the drill is drawn away from the exactly wanted engagement point simultaneously as the drill initially cuts a hole having a too large entering diameter that is not acceptable. Thus it occurs that the entering diameter will be up to 0,5-1 mm larger than the nominal dimension. In practice this can lead to that sometimes very expensive work pieces must be fully or partly rejected.

### Objects and features of the invention

The present invention aims at solving the problems mentioned above and produce an improved drill. A primary aim of the invention is thus to produce a drill with a centre cutting edge having minimal tendency to wobble or kick back exactly in connection with the entering of the work piece. According to the invention this aim is realized by the features of the claim.

### Brief description of the appended drawings

In the drawings:
- Fig 1: is a perspective view that generally illustrates the type of drill that the invention refers to,
- Fig 2: is a side view of a drill according to the invention,
- Fig 3: is an, several times enlarged, end view A-A in figure 2, and
- Fig 4: is a, analogously enlarged, cross-section in figure 2.

### Detailed description of the invention

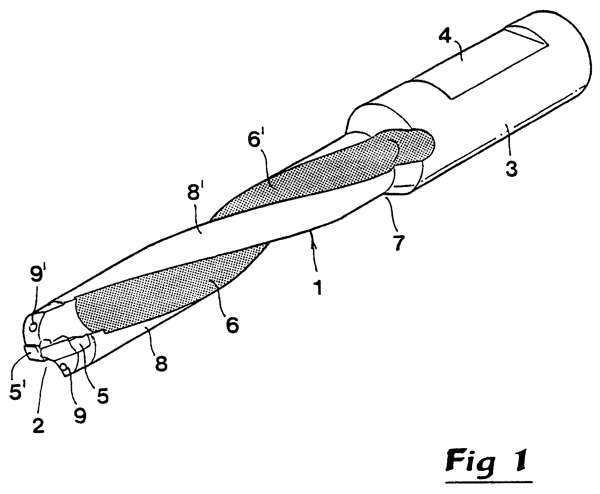

The drill disclosed in figure 1 includes a shank 1 having a front, tip-forming end 2 and a thicker, rear end portion 3 that has a special design, e.g. with a planar surface 4 in order to be secured torsionally rigid in a holder. At the front end there are two, in a common main plane located, cutting inserts or cutting insert-like portions 5, 5' (in up-to-date drills the inserts are designed as parts of a common cemented carbide body). Said cutting inserts are provided in connection with outer, free ends of two flutes 6, 6' that are at least partly helical or twisted and extend from the tip end to a base end in connection with the thicker portion 3, said base end being designated by 7. The flutes 6, 6' are delimited from each other by two likewise helical lands 8, 8'. In figure 1 it is also disclosed how two flushing ducts 9, 9' emerges in the tip end of the shank.

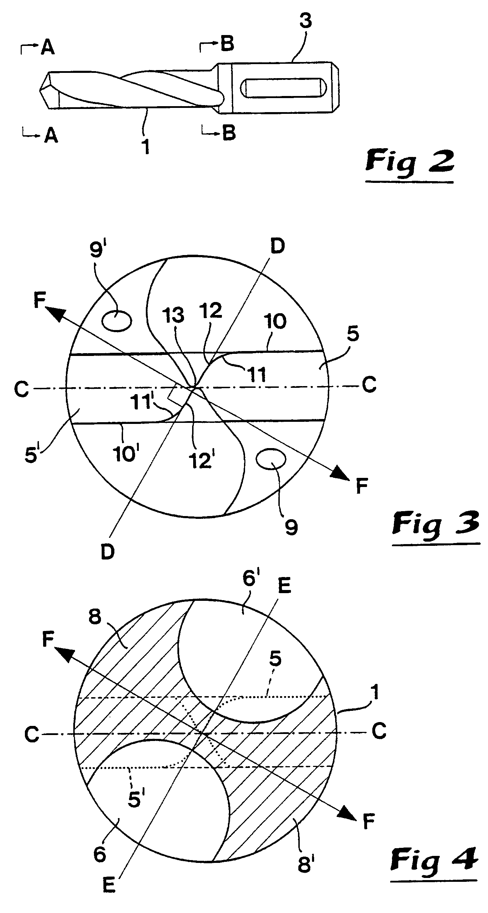

In figure 3 said main plane for the two cutting inserts 5, 5' is designated by C-C. Each cutting insert has a comparatively long, straight main cutting edge 10, 10' that is substantially parallel to the plane C-C. Via a rounded transition portion 11 and 11' respectively each main cutting edge is transferred into a central, shorter cutting edge 12 and 12' respectively. Said central cutting edges 12, 12' are oriented substantially in a common, secondary plane D-D that extends in acute angle (e.g. about 60°) relative to the main plane C-C. The cutting edges 12, 12' form together a centre cutting edge that in its centre has a punch-like, diminutive material portion that forms the absolute centre of the drill tip and its outermost point. Said punch portion is designated by 13 in figure 3.

In figure 4 is shown how the two flutes 6, 6' in each single, arbitrary cross-section along the shank are located diametrically opposite to each other. More specifically the flutes are oriented in a common plane E-E that below is named duct plane. Seen in a separate cross-section also the two lands 8, 8', that delimits the flutes, are naturally located diametrically opposite to each other in a plane designated by F-F, said plane below being named the land plane. As is clearly shown in figure 4 the duct plane E-E extends perpendicular to the land plane F-F. It is axiomatic that the drill shank has maximum bending rigidity in the land plane F-F and minimal bending rigidity in the duct plane E-E.

As far as the disclosed drill has been described up to here it is essentially known from e.g. SE 9103713-5.

The present invention is based on the fact that it is realized that the physical orientation of the centre cutting edge 12, 12' (i.e. the plane D-D) in relation to the orientation of the land plane or the main rigidity direction F-F at the base end of the shank, i.e. in the section B-B, is of significant importance for the entering properties of the drill tip. The disturbing forces that may occur in the entering moment, also if the drill initially is centering correctly, are normally due to chip compressions or chip cloggings close to the centre of the drill. These chip compressions or chip cloggings will in their turn affect the centre cutting edge, i.e. the edges 12, 12', to a varying degree and more specifically substantially at an angle of 90° to the plane D-D. According to the teaching of the present invention the drill disclosed in figures 2-4 has been designed in such a way that the secondary plane D-D of the centre cutting edge 12, 12' is oriented essentially at an angle of 90° to the land plane or the main rigidity direction F-F at the base end 7 of the shank. In figure 4 these two cutting inserts 5, 5' are indicated by dotted lines and from this figure it is learnt how the plane D-D substantially coincides with the duct plane E-E at the base end, i.e. in the cross-section B-B. This means that the land plane F-F in which the shank has its highest bending rigidity in the area of the base end is oriented perpendiculary to the centre cutting edge 12, 12'. Therefore, when the two cutting edges 12, 12' are subjected to forces in connection with the entering of the drill tip in a work piece, said cutting edges 12, 12' achieve maximum rigidity to shape, i.e. the tendency of the cutting edges to wobble or wabble, due to bending movements in the shank, is reduced to a minimum.

In a twist drill of the type disclosed on the drawings the wanted orientation of the centre cutting edge relative to the land plane F-F of the base end portion may be achieved in different ways in connection with the manufacturing of the drill. One way is to guide progressively the pitch angle of the flutes in connection with the milling (by a radiused shank end mill) of the flutes, i.e. the pitch angle of the flutes is brought to increase or decrease continuously from the tip towards the base end whereby the main rigidity direction or the land plane F in the cross-section B-B lies at an angle of about 90° to the secondary plane D-D of the centre cutting edge 12, 12'. Another way is to change the pitch angle of the flutes in two or more steps.

Although optimum entering properties are achieved in case the angle between the centre cutting edge 12, 12' and the main rigidity direction F-F amount to 90° it is also possible to design the drill with an angle within the interval 80-100°, preferably 85-95°.

## Claims

1. Drill including a shank (1) having a front, tip-forming end (2) with two in a common main plane (C-C) located cutting inserts or cutting insert-like portions (5, 5') having cutting edges (10, 10') parallel to said main plane, said cutting edges at opposite ends transforming into shorter, central cutting edges (12, 12') being oriented in a substantially common secondary plane (D-D) extending at an acute angle relative to said main plane, said cutting edges (12, 12') together forming a pointed centre cutting edge for the purpose of entering a work piece, whereby the drill is centered in a desired point relative to the work piece, said shank having two at least partly helical flutes (6, 6') extending from the tip end (2) to a base end (7) in connection with a rear holding portion (3) of the shank, said flutes in each arbitrary cross-section along the shank being located diametrically opposite each other in a plane (E-E) extending at an angle of 90° to a plane (F-F) that is common for two lands (8, 8') on both sides of the flutes (6, 6'), the shank having maximum bending rigidity in said plane (F-F), **characterized in that** the secondary plane (D-D) for the centre cutting edge (12, 12') is oriented at an angle relative to said land plane or main rigidity direction (F-F) at the base end (7) of the shank, said angle being 80-100°, conveniently 85-95° and preferably 90°.

## Patentansprüche

1. Bohrer mit einem Schaft (1) mit einem vorderen, eine Spitze bildendenden Ende (2) mit zwei in einer gemeinsamen Hauptebene (C-C) angeordneten Schneideinsätzen oder Schneideinssatz ähnlichen Teilen (5, 5') mit Schneidkanten (10, 10') parallel zu der Hauptebene, wobei die Schneidkanten an entgegengesetzten Enden in kürzere, zentrale Schneidkanten (12, 12') wechseln, die in einer im wesentlichen gemeinsamen zweiten Ebene (D-D) ausgerichtet sind, welche sich unter einem spitzen Winkel relativ zu der Hauptebene erstreckt, wobei die Schneidkanten (12, 12') zusammen eine spitz zulaufende Zentrumsschneidkante bilden zwecks Eintretens in ein Werkstück, wodurch der Bohrer an einem gewünschten Punkt relativ zu dem Werkstück zentriert wird, wobei der Schaft (2) mindestens teilweise spiralförmige Spannuten (6, 6') hat, die sich von dem spitzen Ende (2) zu einem Basisende (7) in Verbindung mit einem rückwärtigen Halteteil (3) des Schaftes erstrecken, wobei die Spannuten in jedem willkürlichen Querschnitt längs des Schaftes diametral gegenüber einander in einer Ebene (E-E) angeordnet sind, die sich unter einem Winkel von 90° zu einer Ebene (F-F) erstreckt, die zwei Fasen (8, 8') auf beiden Seiten der Spannuten (6, 6') gemeinsam ist, wobei der Schaft maximale Biegesteifigkeit in dieser Ebene (F-F) hat, **dadurch gekennzeichnet, daß** die zweite Ebene (D-D) für die Zentrumsschneidkante (12, 12') unter einem Winkel relativ zu der Fasenebene oder Hauptsteifigkeitsrichtung (F-F) an dem Basisende (7) des Schaftes ausgerichtet ist und der Winkel 80-100° ist, zweckmäßigerweise 85-95° ist und vorzugsweise 90° beträgt.

## Revendications

1. Foret comprenant une tige (1) comportant une extrémité avant formant une pointe (2) avec deux dispositifs insérables de coupe, ou portions de type dispositif insérable (5, 5'), situés sur un plan principal commun (C-C) et ayant des taillants principaux (10, 10') parallèles audit plan commun, lesdits taillants de coupe se transformant, à des extrémités opposées, en taillants de coupe centraux plus courts (12, 12') orientés dans un plan secondaire sensiblement commun (D-D) s'étendant à angle aigu par rapport audit plan principal, lesdits taillants de coupe (12, 12') formant ensemble un taillant central en pointe dans le but de pénétrer dans une pièce à usiner, le foret étant ainsi centré en un point souhaité par rapport à la pièce à usiner, ladite tige comportant deux goujures au moins partiellement hélicoïdales (6, 6) s'étendant de l'extrémité en pointe (2) vers une extrémité de base (7) en connexion avec une portion porteuse arrière (3) de la tige, lesdites goujures dans chaque coupe transversale arbitraire le long de la tige étant placées pour être diamétralement opposées l'une à l'autre dans un plan (E-E) s'étendant à un angle de 90° par rapport à un plan (F-F) qui est commun à deux surfaces (8, 8') sur les deux côtés des goujures (6, 6'), la tige ayant une rigidité maximale de flexion dans ledit plan (F-F), **caractérisé en ce que** le plan secondaire (D-D) du taillant central (12, 12') est orienté selon un angle par rapport audit plan de surface ou à la direction de rigidité principale (F-F) à l'extrémité de base (7) de la tige, ledit angle étant compris entre 80 et 100°, de manière appropriée entre 85 et 95° et de préférence de 90°.
